# EUROPÄISCHE PATENTSCHRIFT

(11) **EP 0 965 599 B1**
(45) Veröffentlichungstag und Bekanntmachung des Hinweises auf die Patenterteilung: **29.01.2003**
(21) Anmeldenummer: 99110789.7
(22) Anmeldetag: 04.06.1999
(51) Int. Cl.: C08F 4/02, C08F 4/60, C08F 10/00

(54) **Verfahren zur Herstellung von geträgerten Polymerisationskatalysatorsystemen und Verwendung dieser zur Homo-und Copolymerisation ungesättigter Momomere**
Process for the production of supported catalyst systems and use thereof in the homo or copolymerisation of unsaturated monomers
Procédé de préparation de systèmes catalytiques sur support et utilisation de ceux-ci dans l'homo ou la copolymérisation de monomères insaturés

(30) Priorität: 16.06.1998 DE 19826743
(43) Veröffentlichungstag der Anmeldung: 22.12.1999
(73) Patentinhaber: Bayer Aktiengesellschaft, 51368 Leverkusen (DE)
(72) Erfinder: Winkelbach, Hans-Rafael Dr., 50765 Köln (DE); Schertl, Peter Dr., 51373 Leverkusen (DE); Nentwig, Wolfgang Dr., 51465 Bergisch Gladbach (DE)

(56) Entgegenhaltungen:
- EP-A- 0 798 315
- WO-A-98/18842

## Beschreibung

Die Erfindung betrifft ein Verfahren zur Herstellung geträgerter Polymerisationskatalysatorsysteme, dadurch gekennzeichnet, daß man
a) einen oder mehrere unterschiedliche Übergangsmetallkomplexe in einem Gemisch von mindestens zwei unterschiedlichen Lösungsmitteln, die sich in ihren Siedepunkten unterscheiden, löst,
b) die so erhaltene Lösung mit einem oder mehreren unterschiedlichen Trägermaterialien in Kontakt bringt, wobei das Volumen der Lösung ausreicht, um eine Aufschlämmung mit dem oder den Trägermaterialien zu bilden, wobei das Volumen des höher siedenden Lösungsmittels kleiner oder gleich dem Gesamtporenvolumens des Trägers ist, und
c) das bei niedrigerer Temperatur siedende Lösungsmittel zu mehr als 90 % entfernt, wobei der oder die Cokatalysatoren entweder zusammen mit dem oder den Übergangsmetallkomplexen in Schritt a) zugegeben oder bereits auf dem oder den in Schritt b) verwendeten Trägermaterialien aufgebracht worden sind oder teilweise zusammen mit dem Übergangsmetallkomplex in Schritt a) zugegeben werden und teilweise bereits auf dem oder den in Schritt b) verwendeten Trägermaterialien aufgebracht worden sind,
die mittels diesem Verfahren herstellbaren geträgerten Polymerisationskatalysatoren, sowie deren Verwendung in Verfahren zur Homo- oder Copolymerisation von ungesättigten Monomeren.

Katalysatorsysteme, welche die Homo- oder Copolymerisation ungesättigter Monomere katalysieren, haben in der Vergangenheit eine große Bedeutung erlangt. Diese Katalysatorsysteme ("Single Site Catalysts") weisen als wesentliche Bestandteile einen Übergangsmetallkomplex als aktive Katalysatorkomponente sowie eine Cokatalysatorkomponente auf, vorzugsweise ein Alkylaluminoxan oder das Salz eines nicht-koordinierendes Anions. Als Übergangsmetallkomponente werden bevorzugt π-Komplexe der Gruppen 3 bis 8 des Periodensystems der Elemente, insbesondere (substituierte) Cyclopentadienylkomplexe der Gruppe 4, als auch Diazadienderivate der Gruppe 8, insbesondere des Nickels und des Palladiums, eingesetzt. Als Cokatalysatorkomponente finden vorzugsweise Methylaluminoxan oder (substituierte) Tetraarylborate Verwendung. Ungesättigte Monomere sind bevorzugt Ethen, α-Olefine, Diolefine, Vinyl- oder Acrylverbindungen, insbesondere Vinylacetat, Methylmethacrylat oder Acrylnitril. Solche Systeme besitzen im Gegensatz zu den weit verbreiteten, konventionellen Ziegler-Natta-Systemen neben einer hohen Aktivität und Produktivität auch die Fähigkeit zur gezielten Steuerung der Produkteigenschaften in Abhängigkeit von den eingesetzten Komponenten und Reaktionsbedingungen, sowie die Möglichkeit, zu neuartigen Polymerstrukturen mit vielversprechenden Eigenschaften im Hinblick auf deren technische Anwendung zu gelangen.

In der Literatur ist eine Vielzahl an Publikationen bekannt, welche die Herstellung spezieller Polymere mit besagten Katalysatorsystemen zum Gegenstand haben. In EP-B-129 368 werden beispielsweise Katalysatorsysteme aus (substituierten) Cyclopentadienylmetallkomplexen mit Metallen der Gruppen 4 bis 6 und Methylaluminoxan beschrieben, welche die Polymerisation von Olefinen ermöglichen. Ein weiteres Katalysatorsystem zur Polymerisation von Olefinen und Acrylat-Monomeren eröffnet WO 96/23010, das die Herstellung von Polyolefinen unter Verwendung von Diazadienkomplexen mit Metallen der Gruppen 4 bis 8 beschreibt. EP-A-420 436 hat Heteroatom-substituierte, verbrückte Monocyclopentadienylkomplexe mit Metallen der Gruppe 4 zum Gegenstand, die durch Kombination mit Aluminoxanen die Polymerisation von Olefinen katalysieren. EP-B-509 294 schildert die Homo- und Copolymerisation von α-Olefinen mit Hilfe eines Katalysatorsystems bestehend aus (substituierten) Monocyclopentadienylkomplexe des Chroms und nicht-koordinierenden Anionen.

Die beschriebenen Katalysatorsysteme erzeugen unter Polymerisationsbedingungen Polymere, die im allgemeinen im Reaktionsmedium unlöslich sind. Demzufolge bilden diese im Reaktionsmedium löslichen (homogenen) Katalysatorsysteme Polymerablagerungen an den Reaktorwänden aus, welche die thermische Kontrolle der Reaktion erschweren. Ein weiterer Nachteil besteht darin, daß diese im allgemeinen zur Steuerung der Polymerpartikelmorphologie nicht geeignet sind.

Die beschriebenen Nachteile können vermieden werden, indem die besagten polymerisationsaktiven Katalysatorsysteme auf inerten bzw. inertisierten Trägermaterialien aufgebracht und auf diese Weise heterogenisiert werden. Solche geträgerten Katalysatorsysteme besitzen darüber hinaus den Vorteil, in Gasphasenprozessen einsetzbar zu sein, wobei die besagte Polymerpartikelmorphologie direkt durch die Partikelform des Trägers vorgegeben werden kann. Desweiteren erreichen heterogenisierte Katalysatorsysteme im allgemeinen ihre maximale Aktivität bei geringeren Cokatalysator/Katalysator-Verhältnissen als bei ihrer Verwendung im homogenen Fall, wie beispielsweise W. Kaminsky et al. in *J. Macromol. Sci., Rev. Macromol. Chem. Phys.* 1997, *C37,* 519-54 aufzeigen.

Zur Trägerfixierung von Polymerisationskatalysatorsystemen, insbesondere Metallocenen sind mehrere Möglichkeiten bekannt. EP-A-206 794 beschreibt heterogene Katalysatorsysteme, die durch gleichzeitige oder sukzessive Zugabe von Metallocenkatalysator und Aluminoxancokatalysator auf ein anorganisches Trägermaterial erhalten werden. In EP-B-323 716 und EP-B-367 503 wird die Herstellung eines heterogenen Katalysatorsystems aus Metallocenkatalysator und Aluminoxancokatalysator beschrieben, indem die Aluminoxankomponente in situ durch Reaktion eines Trialkylaluminiumderivates mit undehydratisiertem Kieselgel gebildet und das aktive Katalysatorsystem durch nachfolgende Zugabe der Metallocenkomponente erhalten wird. EP-A-474 391 und EP-A-314 797 dagegen beanspruchen heterogene Katalysatorsysteme, charakterisiert durch die vorhergehende Bildung der fixierten Cokatalysatorkomponente durch Reaktion einer Organoaluminiumverbindung mit den Hydroxylgruppen des Trägermaterials.

WO 96/00243 beschreibt die Trägerung von Metallocenkatalysatoren und Aluminoxancokatalysatoren auf porösen Trägermaterialien, wobei eine Lösung des Metallocens und des Aluminoxans gebildet und diese mit dem Trägermaterial in Kontakt gebracht wird, und wobei das Volumen der Katalysatorlösung dem ein- bis dreifachen des Porenvolumens des verwendeten Trägermaterials entspricht, so daß das Volumen der Katalysatorlösung nicht ausreicht, um eine Aufschlämmung zu bilden. In WO 96/00245 werden geträgerte Katalysatorsysteme beansprucht, wobei diese durch Inkontaktbringen einer Metallocen- und Cokatalysatorlösung mit einem porösen Trägermaterial hergestellt werden und das gesamte Volumen der Metallocen- und der Cokatalysatorlösung geringer ist als das Volumen, um eine Aufschlämmung zu bilden, jedoch mindestens größer als das Porenvolumen des verwendeten Trägermaterials, wobei weiterhin Methoden ausdrücklich ausgeschlossen werden, bei welchen das gesamte Volumen der Metallocen- und der Cokatalysatorlösung geringer ist als das Porenvolumen des verwendeten Trägermaterials. Weiterhin wird in WO 96/14155 ein Verfahren zur Trägerung von Katalysatorsystemen beschrieben, wobei der poröse Träger mit einer Aluminoxanlösung oder einer Metallocen-Aluminoxanlösung imprägniert wird und wobei das Volumen dieser Lösung kleiner als das Zweifache des Gesamtporenvolumens des Trägers, kleiner als das Volumen, das zur Bildung einer Aufschlämmung bzw. Suspension erforderlich ist, und zudem größer oder gleich dem Gesamtporenvolumens des Trägers ist. Die in WO 96/00243, WO 96/00245 und WO 96/14155 beschriebenen Methoden besitzen den Nachteil, daß die nach diesen Lehren hergestellten geträgerten Katalysatoren nicht in Form freifließender Pulver erhalten werden, was in technischen Prozessen von Nachteil ist.

In US 5 688 734 wird ein Verfahren zur Herstellung präpolymerisierter, geträgerter Katalysatorsysteme beschrieben, die durch vorangehende Imprägnierung eines porösen Trägers mit dem Reaktionsprodukt aus Metallocen und Aluminoxan in Kohlenwasserstofflösungsmitteln, anschließende Trocknung des Umsetzungsproduktes und nachfolgende Zugabe von aliphatischen Kohlenwasserstofflösungsmitteln erhalten und zur Präpolymerisation mit gasförmigen Monomeren eingesetzt werden. Das Volumen des Metallocen-Aluminoxan-Kohlenwasserstoffgemisches soll dabei kleiner oder gleich dem Gesamtporenvolumens des Systems sein. Nachteile dieses Verfahrens sind die vergleichsweise hohe Anzahl an Verfahrensschritten, um zum einsetzbaren präpolymerisierten Katalysatorsystem zu gelangen, und daß das auf dem Träger erzeugte, ionische Katalysatorsystem aufgrund seiner Schwerlöslichkeit im aliphatischen Kohlenwasserstoffen in heterogener Form vorliegt.

WO-98/18842-A1 offenbart ein Verfahren zur Herstellung von Polymerisationssystemen, wobei man MAO und Metallocen in Toluol löst und diese Lösung zu Silica in Isohexan hinzufügt und die Suspension trocknet. Hierbei wird das niedrig siedende Lösungsmittel nicht selektiv entfernt.

EP-A1-0 798 315 offenbart Suspensionen, Lösungen oder Dispersionen von Metallocenen in Formulierungen. Eines der beanspruchten Verfahren besteht darin, daß man eine Lösung eines Metallocens in einem niedrigsiedenden Lösungsmittel in einer ersten Stufe in einen Kohlenwasserstoff mit einem Siedepunkt über 150°C einbringt und in einer zweiten Stufe das niedrigsiedenden Lösungsmittel entfernt. Gegebenfalls darf ein Trägermaterial anwesend sein. Der Einfluss des Porenvolumens des Trägers wird nicht berücksichtigt.

Zusammenfassend läßt sich also sagen, daß sämtliche im Stand der Technik beschriebenen Methoden zur Immobilisierung den Anforderungen an ein industriell verwertbares Katalysatorsystem bezüglich der Kontrolle der Partikelmorphologie und der leichten Abtrennbarkeit genügen, sie sind jedoch gekennzeichnet durch geringere Aktivität im Vergleich zu homogenen Systemen oder durch ihren besagten Mangel, als frei fließende Pulver in geeigneten Prozessen eingesetzt werden zu können.

Aufgabe der vorliegenden Erfindung ist die Kombination der Vorteile einer industriell und wirtschaftlich bevorzugten, heterogenen Prozeßführung mit der gleichzeitig erwünschten hohen Aktivität eines homogenen Katalysatorsystems, wobei das Katalysatorsystem in Form freifließender Partikel vorliegt.

Es wurde überraschenderweise gefunden, daß sich das aus der Literatur (P.R. Rony, *Chem. Eng. Sci*. 1968, *23*, 1021-1034) bekannte Modell der "Supported Liquid-phase Catalysts" auch auf Polymerisationskatalysatorsysteme übertragen läßt, daß diese selbst bei reduziertem Anteil der Cokatalysatorkomponente eine hohe Aktivität und Produktivität aufweisen, und daß dieses Konzept auch auf Multikomponentensysteme anwendbar ist.

Supported Liquid-Phase Polymerisationskatalysatorsysteme zeichnen sich durch eine hohe Variabilität der einsetzbaren Katalysatorbestandteile sowie der Monomere aus. Sie bestehen aus einer in einem porösen Trägermaterial dispergierten, flüssigen, hochsiedenden Phase, in der die Katalysatorbestandteile in gelöster Form vorliegen. Zur Erzielung hoher Aktivitäten und zur Erzeugung frei fließender Pulver ist es essentiell, daß das Porenvolumen des verwendeten Trägers durch das Volumen der flüssigen Phase nicht überschritten wird. Weitere Vorzüge bestehen in der Tatsache, daß die Konzentration der Monomeren bei Verwendung des Katalysators in Gasphasenprozessen in unmittelbarer Nähe der aktiven Katalysatorkomponente aufgrund der Löslichkeit der meisten Monomere in der dispergierten Flüssigphase deutlich höher ist, und daß die Separation des in den überwiegenden Fällen vorliegenden ionischen Katalysatorsystems durch Solvatation des Ionenpaars ermöglicht wird. Die Aufweitung des Abstandes zwischen den Bestandteilen des Ionenpaars wird im allgemeinen für dessen höhere Aktivität verantwortlich gemacht.

Die vorliegende Erfindung betrifft demnach ein Verfahren zur Herstellung geträgerter Polymerisationskatalysatorsysteme, dadurch gekennzeichnet, daß man
a) einen oder mehrere unterschiedliche Übergangsmetallkomplexe in einem Gemisch von mindestens zwei unterschiedlichen Lösungsmitteln, die sich in ihren Siedepunkten unterscheiden, löst, wobei das höhes Siedende Lösungsmittel bei Normaldruck einen Siedepunkt von höhes als 150 °C besitzt,
b) die so erhaltene Lösung mit einem oder mehreren unterschiedlichen Trägermaterialien in Kontakt bringt, wobei das Volumen der Lösung ausreicht, um eine Aufschlämmung mit dem oder den Trägermaterialien zu bilden, wobei das Volumen des höher siedenden Lösungsmittels kleiner oder gleich dem Gesamtporenvolumens des oder der Trägermaterialien ist, und
c) das bei niedrigerer Temperatur siedende Lösungsmittel zu mehr als 90 % entfernt, wobei der oder die Co-Katalysatoren entweder zusammen mit dem Übergangsmetallkomplex in Schritt a) zugegeben werden oder bereits auf dem oder den in Schritt b) verwendeten Trägermaterialien aufgebracht worden sind oder teilweise zusammen mit dem Übergangsmetallkomplex in Schritt a) zugegeben werden und teilweise bereits auf dem oder den in Schritt b) verwendeten Trägermaterialien aufgebracht worden sind.

Die vorliegende Erfindung betrifft weiterhin nach dem erfindungsgemäßen Verfahren herstellbare geträgerte Polymerisationskatalysatorsysteme, deren Verwendung zur Homo- und Copolymerisation ein- oder mehrfach ungesättigter Monomere in Gasphasen- und "Slurry"-Prozessen sowie die mit den erfindungsgemäß geträgerten Polymerisationskatalysatorsystemen herstellbaren Polymerisate.

Im speziellen liegt dem erfindungsgemäßen Verfahren eine Methode zur Herstellung eines geträgerten Polymerisationskatalysatorsystems zugrunde, in dem ein Lösungsmittelgemisch, das die gelösten Katalysatorsystemkomponenten enthält, mit einem porösen Trägermaterial in Kontakt gebracht wird, wobei das Lösungsmittelgemisch aus mindestens zwei Solventien besteht, die sich in ihren Siedepunkten deutlich unterscheiden, wobei weiterhin das Volumen des höhersiedenden Lösungsmittels kleiner ist als das Porenvolumen des verwendeten Trägermaterials, wobei das höhersiedende Lösungsmittel auf dem porösen Trägermaterial verbleibt und die Katalysatorsystemkomponenten gelöst enthält und das niedriger siedende Lösungsmittel destillativ entfernt wird.

Vorzugsweise vor, während und gegebenenfalls nach dem Auftragen der Katalysatorsystemkomponenten wird die Feststoffsuspension bewegt, z.B. in einem Rührkessel mit einem konventionellen Rühraggregat, wie z.B. einem Kreuzbalkenrührer oder einem Wendelrührer, oder in einer weitereren bevorzugten Form mit einem Pflugscharmischer. Die Imprägnierung des Trägermaterials mit Katalysatorsystemlösung kann vorzugsweise auch in einem Wirbelbett erfolgen. Dabei wird auf das Trägermaterial, das durch einen Inertgasstrom fluidisiert wird, die Wirkstofflösung aufgebracht, z.B. durch Versprühen mittels einer Düse. Über einen internen Kreislauf kann das Inertgas, nachdem es von mittransportiertem Lösungsmittel befreit wurde, in den Reaktor zurückgeführt werden. Das inerte, niedriger siedende Lösungsmittel kann zur Zubereitung der Wirkstofflösung wiederverwendet werden. Das erfindungsgemäße Verfahren kann auch kontinuierlich durchgeführt werden. Desweiteren ist es möglich, durch Einstellen des Verhältnisses der zudosierten Menge an Katalysatorsystemkomponenten das Wirksamkeitsniveau des Katalysatorsystems zu steuern.

Die Herstellung des geträgerten Katalysatorsystems kann in einem weiten Temperaturbereich erfolgen. Im allgemeinen liegt die Temperatur zwischen Schmelz- und Siedepunkt des inerten Lösungsmittelgemisches. Üblicherweise wird bei Temperaturen von -50 bis +200°C, bevorzugt -20 bis 100°C, besonders bevorzugt 20 bis 60°C, gearbeitet.

Im Anschluß an die Imprägnierung des Trägermaterials mit Wirkstofflösung wird das niedriger siedende, inerte Lösungsmittel bzw. die inerten Lösungsmittel, destillativ so vollständig entfernt, daß das Volumen des verbleibenden höher siedenden Lösungsmittel bzw. der verbleibenden höher siedenden Lösungsmittel kleiner oder gleich dem Porenvolumen des verwendeten Trägermaterials ist. Bevorzugt wird das niedriger siedende Lösungsmittel zu mehr als 90 % entfernt.

Die Destillation kann sowohl in dem gleichen Behälter, in dem auch die Imprägnierung durchgeführt wurde, als auch in einer separaten Apparatur, z.B. einem Wirbelschichttrockner erfolgen. Bei der Entfernung des Lösungsmittels, bzw. der Lösungsmittel muß der Zutritt von Luft und Feuchtigkeit vermieden werden. Die Destillation wird je nach verwendetem Lösungsmittel bei Temperaturen von 0 bis 150°C, vorzugsweise bei 10 bis 70°C, und Drücken von 0,001 mbar bis 20 bar absolut, vorzugsweise 0,001 mbar bis Normaldruck durchgeführt. Die Destillation kann auch kontinuierlich durchgeführt werden. Das unter Inertbedingungen aufgefangene Kondensat kann ohne weitere Aufarbeitung als Lösungsmittelkomponente für die in der Imprägnierung eingesetzten Wirkstoffe wiederverwendet werden.

Bei dem erfindungsgemäßen Verfahren eignen sich alle porösen, in den verwendeten Lösungsmittel oder Lösungsmittelgemischen formstabilen Trägermaterialien mit ausreichend hohem Porenvolumen, welches sich anhand der gestellten Aufgabe leicht durch Vorversuche ermitteln läßt. Als Trägermaterialien werden bevorzugt teilchenförmige, organische oder anorganische Feststoffe, deren Porenvolumen zwischen 0,1 und 15 ml/g beträgt, bevorzugt zwischen 0,25 und 5 ml/g, deren spezifische Oberfläche größer als 1 ist, bevorzugt 10 bis 1000 m²/g (BET), deren Korngröße zwischen 10 und 2500 µm beträgt, bevorzugt zwischen 50 und 1000 µm, und die an ihrer Oberfläche in geeigneter Weise modifiziert sein können, eingesetzt.

Die spezifische Oberfläche wird in üblicher Weise bestimmt nach Brunauer, Emmet und Teller, *J. Anorg. Chem. Soc.* 1938, *60,* 309, das Porenvolumen durch die Zentrifugationsmethode nach McDaniel, *J. Colloid Interface Sci*. 1980, *78,* 31 und die Teilchengröße nach Cornillaut, *Appl. Opt.* 1972, *11*, 265.

Als geeignete anorganische Feststoffe seien beispielsweise genannt, ohne die vorliegende Erfindung jedoch einschränken zu wollen: Silicagele, Fällungskieselsäuren, Tone, Alumosilikate, Talkum, Zeolithe, Ruß, anorganische Oxide, wie beispielsweise Siliciumdioxid, Aluminiumoxid, Magnesiumoxid, Titandioxid, anorganische Chloride, wie beispielsweise Magnesiumchlorid, Natriumchlorid, Lithiumchlorid, Calciumchlorid, Zinkchlorid, oder Calciumcarbonat. Die genannten, anorganischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 21, S. 439 ff (Silicagele), Band 23, S. 311 ff (Tone), Band 14, S. 633 ff (Ruße) und Band 24, S. 575 ff (Zeolithe).

Als organische Feststoffe eignen sich pulverförmige, polymere Materialien, bevorzugt in Form frei fließender Pulver, mit den obengenannten Eigenschaften. Beispielhaft seien genannt, ohne die vorliegende Erfindung einschränken zu wollen: Polyolefine, wie beispielsweise Polyethen, Polypropen, Polystyrol, Polystyrol-co-divinylbenzol, Polybutadien, Polyether, wie beispielsweise Polyethylenylenoxid, Polyoxytetramethylen oder Polysulfide, wie beispielsweise Poly-*p*-phenylensulfid. Besonders geeignete Materialien sind Polypropylen, Polystyrol oder Polystyrol-*co*-divinylbenzol. Die genannten organischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 19, S. 195 ff (Polypropylen), und Band 19, S. 265 ff (Polystyrol).

Als polymerisationsaktive Komponenten können alle Polymerisationskatalysatorsysteme Verwendung finden, die in homogener Phase für die Polymerisation ungesättigter Monomere geeignet sind. Ohne die vorliegende Erfindung einschränken zu wollen, sind solche Katalysatorsysteme besonders bevorzugt, die als aktive Bestandteile:
A) einen Übergangsmetallkomplex, welche der allgemeinen Formel I, II, III oder IV genügen, 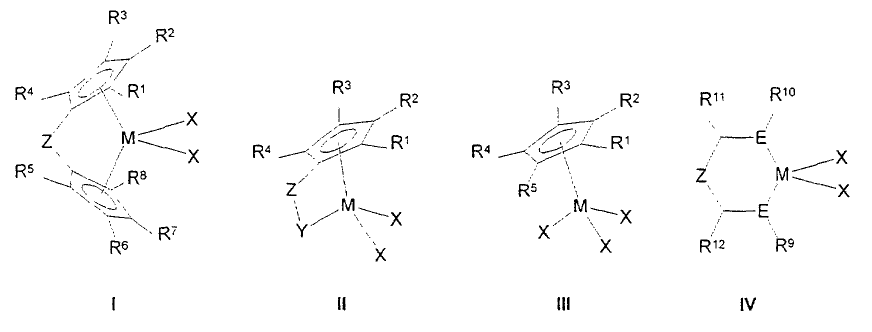 und
B) eine Übergangsmetallkomplexkation-bildende Verbindung enthalten.

In den Formeln I bis IV haben die Substituenten die folgende Bedeutung:
- M: steht für Übergangsmetalle der Gruppen 3 bis 8 des Periodensystems der Elemente, insbesondere für Titan, Zirconium, Hafnium, Vanadium, Chrom, Wolfram, Eisen, Ruthenium, Cobalt, Nickel und Palladium.
- X: ist ein monoanionischer oder nicht-anionischer Ligand, ausgewählt aus Halogenid, Hydrid, C₁- bis C₁₀-Alkyl oder -Alkenyl, C₆- bis C₁₄-Aryl, Alkylaryl mit C₁- bis C₁₀-Gruppierung im Alkylrest und C₆- bis C₂₀-Gruppierung im Arylrest, -OR¹³, OR¹³R¹⁴, -NR¹⁵R¹⁶, NR¹⁵R¹⁶R¹⁷, -PR¹⁵R¹⁶, PR¹⁵R¹⁶R¹⁷ bedeuten, wobei X gleich oder verschieden sein kann, wobei die beiden Gruppierungen X auch verbrückt sein können, und wobei R¹³ bis R¹⁷ aus H, C₁- bis C₁₈-Alkyl, C₅- bis C₈-Cycloalkyl, C₆- bis C₁₄-Aryl, Alkylaryl oder Arylalkyl ausgewählt sein kann und gleich oder verschieden sein können.
- Y: ist ein monoanionischer oder nicht-anionischer Ligand, der kovalent oder koordinativ an M und Z gebunden ist, und der die Elemente Stickstoff, Phosphor, Sauerstoff, Schwefel oder Bor enthält, insbesondere die Gruppierungen -NR¹⁸-, -NR¹⁸ R¹⁹-, -PR¹⁸-, -(PR¹⁸R¹⁹)ₘ-, -BR²⁰-, -BR²¹R²¹-, -O-, -Sₙ-, -OR²²- oder -(SR²²)ₘ-, wobei R¹⁸ bis R²² aus H, C₁- bis C₁₈-Alkyl, C₅- bis C₈-Cycloalkyl, C₆- bis C₁₄-Aryl, Alkylaryl, Arylalkyl oder Halogen ausgewählt sein kann und gleich oder verschieden sein können, und m eine ganze Zahl von 1 bis 8 ist.
- Z: steht für eine kovalente oder koordinative Brückeneinheit, insbesondere -(CR²³R²⁴)ₘ-, -(SiR²⁵R²⁶)ₘ, -(CR²³R²⁴SiR²⁵R²⁶)ₘ-, -(CR²³R²⁴O)ₘCR²³R²⁴-, -(SiR²⁵R²⁶O)ₘSiR²⁵ R²⁶-, -NR²⁷-, -NR²⁷R²⁸-, -PR²⁷-, -(PR²⁷R²⁸)ₘ-, -BR²⁹-, -BR²⁹R³⁰-, -O-, -Sₘ-, -OR²³-, -(SR²³)ₘ-, -B(R²⁹R³⁰)P(R²⁷R²⁸)- oder -B(R²⁹R³⁰)N(R²⁷R²⁸)-, wobei R²³ bis R³⁰ aus H, C₁- bis C₁₈-Alkyl, C₅- bis C₈-Cycloalkyl, C₆- bis C₁₄-Aryl, Alkylaryl, Arylalkyl oder Halogen ausgewählt sein kann, und wobei R²¹ bis R²⁷ gleich oder verschieden sein können, und m eine ganze Zahl von 1 bis 8 ist. Z kann auch Teil eines Ringsystems sein.
- E: steht für Elemente der Gruppen 15 und 16 des Periodensystems der Elemente, insbesondere Stickstoff, Phosphor oder Sauerstoff und Gruppierungen, die Elemente der Gruppen 15 und 16 des Periodensystems der Elemente enthalten. E kann kann auch Teil eines Ringsystems sein.
- R¹ bis R⁸: steht für H, C₁- bis C₁₈-Alkyl, C₅- bis C₈-Cycloalkyl, das wiederum C₁- bis C₈-Alkylgruppen tragen kann, C₆- bis C₁₄-Aryl, Alkylaryl, Arylalkyl, wobei zwei benachbarte Reste gemeinsam C₃- bis C₁₄-Cyclen bilden können, oder für -(CR¹³R¹⁴)ₘSiR³¹R³²R³³, -(CR¹³R¹⁴)ₘNR³⁴R³⁵, -(CR¹³R¹⁴)ₘPR³⁴R³⁵, -SiR³¹R³²R³³, -NR³⁴R³⁵, -PR³⁴R³⁵, -BR³⁶R³⁷ oder Halogen, wobei R¹ bis R⁸ gleich oder verschieden sein können, und wobei R³¹ bis R³⁷ aus der Gruppe H, C₁- bis C₁₈-Alkyl, C₅- bis C₈-Cycloalkyl, C₆- bis C₁₄-Aryl, Alkylaryl, Arylalkyl oder Halogen ausgewählt sein kann und gleich oder verschieden sein können, wobei R¹³ und R¹⁴ die definitionsgemäße Bedeutung haben und m eine ganze Zahl von 1 bis 8 ist.
- R⁹ bis R¹²: bedeuten H, C₁- bis C₁₈-Alkyl, C₅- bis C₈-Cycloalkyl, das wiederum C₁- bis C₈-Alkylgruppen tragen kann, C₆- bis C₁₄-Aryl, das wiederum C₁- bis C₈-unverzweigte und verzweigte Alkylgruppen tragen kann, Alkylaryl, Arylalkyl, wobei R¹¹ und R¹² gemeinsam C₅- bis C₁₄-Cyclen- oder Heterocyclen, die insbesondere die Elemente Silicium, Phosphor, Sauerstoff und Schwefel enthalten, bilden können, und wobei R⁹ bis R¹² gleich oder verschieden sein können.

Die Komplexe der allgemeinen Formeln I bis IV sowie Verfahren zu ihrer Herstellung sind an sich bekannt und beispielsweise beschrieben in *J. Organomet.* 1989, 369, 359-70, in *Organometallics* 1995, *14*, 789-95, in EP-A-420436, in EP-A-416815, in *J. Am. Chem. Soc.* 1995, *117*, 6414-5, in WO96/23010, in *Z. Naturforsch. B* 1978, *33*, 1381-5 und in *Angew. Chem. Int. Ed. Engl*. 1985, *24*, 599-601.

Als Übergangsmetallkomplexkation-bildende Verbindung B) können beispielsweise offenkettige oder cyclische Aluminoxanverbindungen eingesetzt werden, die der allgemeinen Formel V oder VI genügen, 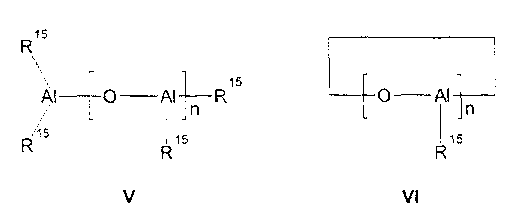 wobei
- R¹⁵: eine C₁- bis C₈-Alkylgruppe bedeutet, vorzugsweise eine Methyl- oder Ethylgruppe, und n für eine ganze Zahl von 3 bis 30, bevorzugt 10 bis 25 steht.

Die Herstellung dieser oligomeren Aluminoxanverbindungen erfolgt üblicherweise durch Umsetzung einer Trialkylaluminiumlösung mit Wasser und ist u.a. in EP-A-284 708 beschrieben. In der Regel liegen die auf diese Weise erhaltenen oligomeren Aluminoxanverbindungen als Gemische unterschiedlich langer, sowohl linearer als auch cyclischer Moleküle vor, so daß n als Mittelwert anzusehen ist. Diese Aluminoxanverbindungen können auch im Gemisch mit anderen Metallalkylen, bevorzugt mit Aluminiumalkylen vorliegen.

Es hat sich als vorteilhaft erwiesen, die Übergangsmetallkomponente und die oligomere Aluminoxanverbindung in solchen Mengen einzusetzen, daß das molare Verhältnis zwischen Aluminium aus der Aluminoxankomponente und dem Übergangsmetall aus der Übergangsmetallkomponente im Bereich von 1:1 bis 20000:1, insbesondere im Bereich von 10:1 bis 1000:1, liegt.

Als Übergangsmetallkomplexkation-bildende Verbindung B) können aber auch Koordinationskomplexverbindungen eingesetzt werden, ausgewählt aus der Gruppe der starken, neutralen Lewis-Säuren, der ionischen Verbindungen mit Lewis-sauren Kationen oder Brönstedt-sauren Kationen und nicht-koordinierenden Anionen.

Als starke neutrale Lewis-Säuren sind Verbindungen der allgemeinen Formel VII bevorzugt, in der

M²X¹X²X³ VII

- M²: ein Element der Gruppe 3 bedeutet, insbesondere B, Al oder Ga, vorzugsweise B,
- X¹, X² und X³: für H, C₁- bis C₁₀-Alkyl, C₁- bis C₁₄-Cycloalkyl, C₆- bis C₁₄-Aryl, Alkylaryl, Arylalkyl, Halogenalkyl, Halogenaryl, Halogenalkylaryl oder Halogenarylalkyl mit jeweils C₁- bis C₁₀-Alkyl-, C₁- bis C₁₄-Cycloalkyl- und C₆- bis C₂₀-Arylresten oder/und Fluor, Chlor, Brom oder Jod stehen, insbesondere für Halogenaryle, vorzugsweise perfluorsubstituiert.

Besonders bevorzugt im Sinne der Erfindung werden jedoch Verbindungen der allgemeinen Formel VII, in der X¹, X² und X³ gleich sind, vorzugsweise Tris(pentafluorophenyl)boran eingesetzt. Diese Verbindungen sowie Verfahren zu ihrer Herstellung sind an sich bekannt und u.a. in WO-93/03067 beschrieben.

Als ionische Verbindungen mit Lewis- oder Brönstedt-sauren Kationen und nicht-koordinierenden Anionen sind Verbindungen der allgemeinen Formel VIII geeignet,

[L]^{d+} [(M²)^{m+}Q₁Q₂ ... Qₙ]^{d-} VIII

wobei
- L: ein Lewis-saures Kation gemäß der Lewis-Säure-Base-Theorie bedeutet, vorzugsweise Carbonium-, Oxonium-, oder/und Sulfoniumkationen sowie kationische Übergangsmetallkomplexe, insbesondere Triphenylmethylkation, Silberkation oder Ferrocenylkation, oder L ein Brönstedt-saures Kation gemäß der Brönstedt-Säure-Base-Theorie bedeutet, bevorzugt Trialkylammonium-, Dialkylarylammonium-, oder/ und Alkyldiarylammonium, insbesondere N,N-Dimethylanilinium,
- M²: ein Element der Gruppe 3 bedeutet, insbesondere B, Al oder Ga, vorzugsweise B,
- Q₁ bis Qₙ: für einfach negativ geladene Reste steht wie Hydrid, C₁- bis C₂₈-Alkyl, C₁-bis C₁₄-Cycloalkyl, C₆- bis C₁₄-Aryl, Alkylaryl, Arylalkyl, Halogenalkyl, Halogenaryl, Halogenalkylaryl oder Halogenarylalkyl mit jeweils C₁- bis C₂₈-Alkyl-, C₁- bis C₁₄-Cycloalkyl- und C₆- bis C₁₄-Arylresten, oder Halogen, Alkoxid, Aryloxid oder Organometalloid steht, und Q₁ bis Qₙ gleich oder verschieden sind,
- d: eine ganze Zahlen von 1 bis 6 bedeutet und d = n-m ist,
- n: für ganze Zahlen von 2 bis 8 steht, und
- m: eine ganze Zahl von 1 bis 7 ist.

Bevorzugte Anionen [(M²)^{m+}Q₁Q₂ ... Qₙ]^{d-} der allgemeinen Formel VIII sind jene, in der Q₁ bis Qₙ gleich, raumerfüllende, perfluorosubstituierte, aromatische Kohlenwasserstoffreste sind und M² gleich Bor oder Aluminium ist, insbesondere Tetrakis(pentafluorophenyl)borat.

Es können selbstverständlich auch Mischungen unterschiedlicher polymerisationsaktiver Übergangsmetallkomplexe sowie Mischungen unterschiedlicher Cokatalysatorkomponenten eingesetzt werden.

Als Lösungsmittel können alle Lösungsmittel eingesetzt werden, in denen die besagten Polymerisationskatalysatorsysteme löslich sind, und die inert gegenüber den Katalysatorsystemkomponenten sind. Geeignet sind insbesondere, ohne die vorliegende Erfindung einschränken zu wollen, aromatische Kohlenwasserstoffe, bevorzugt Benzol und substituierte Benzolderivate, besonders bevorzugt Toluol, Xylol, Diisopropylbezol, Butylbenzol, Hexylbenzol, Dodecylbenzol, oder 1,2,3,4-Tetrahydronaphthalin, aliphatische Kohlenwasserstoffe, bevorzugt acyclische Kohlenwasserstoffe, besonders bevorzugt Pentan, Hexan, Heptan, Octan, Nonan, Decan, Dodecan, Tetradecan, Hexadecan oder Eicosan, oder cyclische Kohlenwasserstoffe, besonders bevorzugt Cyclohexan, Methylcyclohexan oder Decahydronaphthalin.

Als höhersiedende Lösungsmittelkomponente eignen sich alle hochsiedenden Lösungsmittel, deren Siedepunkt bei Normaldruck höher als 150°C liegt, in denen die besagten Polymerisationskatalysatorsysteme löslich sind, und die inert gegenüber den Katalysatorsystemkomponenten sind. Geeignet sind insbesondere, ohne die vorliegende Erfindung einschränken zu wollen, aromatische Kohlenwasserstoffe, bevorzugt substituierte Benzolderivate, besonders bevorzugt Cumol, Propylbenzol, Butylbenzol, Hexylbenzol, Dodecylbenzol, 1,3-Diisopropylbenzol, 1,4-Diisopropylbenzol oder 1,2,3,4-Tetrahydronaphthalin, aliphatische Kohlenwasserstoffe, oder bevorzugt acyclische Kohlenwasserstoffe, besonders bevorzugt Decan, Dodecan, Tetradecan, Hexadecan oder Eicosan, oder cyclische Kohlenwasserstoffe, besonders bevorzugt Cyclodecan oder Decahydronaphthalin.

Die Erfindung betrifft weiterhin die Verwendung der erfindungsgemäß hergestellten geträgerten Polymerisationskatalysatoren in einem Verfahren zur Homo- oder Copolymerisation ein- oder mehrfach ungesättigter Monomere in "Slurry"-Prozessen und in der Gasphase.

Geeignete ungesättigte Monomere sind, ohne die vorliegende Erfindung einschränken zu wollen, bevorzugt Ethen, α-Olefine, besonders bevorzugt Propen, Isobuten, 1-Buten, 1-Hexen oder 1-Octen, cyclische Olefine, besonders bevorzugt Norbornen oder Cyclopenten, Vinylaromaten, besonders bevorzugt Styrol oder 4-Methylstyrol, oder Diene, besonders bevorzugt, Ethylidennorbornen, Vinylnorbornen, 1,5-Hexadien, 2-Methyl-1,7-octadien, Norbornadien, 1,3-Cyclopentadien, 1,3-Butadien oder Isopren, substituierte Olefine, bevorzugt Acrylsäureester, Methacrylsäureester, und Kohlenmonoxid.

Die Polymerisation erfolgt besonders bevorzugt, indem man die ein- oder mehrfach ungesättigten Monomere, mit dem beschriebenen sowie erfindungsgemäß hergestellten geträgerten Katalysatorsystem gasförmig, flüssig in feiner Verteilung oder suspendiert in flüssigen Verdünnungsmitteln in Berührung bringt. Den gasförmigen oder versprühten Monomeren können weitere Gase oder fein verteilte Flüssigkeiten zugemischt werden, die entweder der Verdünnung, der Versprühung oder der Wärmeabführung dienen.

Die Polymerisation kann bei Drücken von 0,001 bar bis 1000 bar, bevorzugt 0,1 bis 100 bar, besonders bevorzugt 1 bis 20 bar, durchgeführt werden. Im allgemeinen wird die Polymerisation bei Temperaturen von -20 bis 250°C, bevorzugt bei 0 bis 200°C, besonders bevorzugt bei 20 bis 160°C, durchgeführt.

Die mit den erfindungsgemäßen Katalysatoren herstellbaren Polymerisate eignen sich zur Herstellung von Formkörpern aller Art, insbesondere O-Ringe, Profile, Dichtungen, Membranen und Folien.

Die nachfolgenden Beispiele sollen die vorliegende Erfindung zur Herstellung geträgerter polymerisationsinitiierender Systeme sowie die Durchführung damit katalysierter Homo- und Copolymerisationsverfahren darstellen, ohne diese jedoch auf die Beispiele einzuschränken.

### Beispiele:

Alle Umsetzungen wurden unter strengem Ausschluß von Luft und Feuchtigkeit und unter Verwendung der Schlenk- und Hochvakuumtechnik durchgeführt. Die verwendeten Lösungsmittel waren trocken, mit gereinigtem Stickstoff gesättigt und unter Stickstoffatmosphäre gelagert.

*rac*-[Ethylen-1,2-bis(4,5,6,7-tetrahydro-1-indenyl)]zirconiumdichlorid (EBTHIZrCl₂) wurde als Handelsprodukt der Firma Witco, (Deutschland) bezogen. [1,4-Bis-(2,6-diisopropylphenyl)-1,4-diazabuta-1,3-dien]nickeldibromid (DADNiBr₂) wurde, wie von H. tom Dieck und M. Svoboda in *Z. Naturforsch. B* 1978, 33, 1381 beschrieben, hergestellt. Triethylaluminium und Methylaluminoxan in 10 w-% Lösung in Toluol (Eurecen AL 5100/10T) wurden als Handelsprodukte der Firma Witco (Deutschland) eingesetzt. Dimethylaniliniumtetrakis(pentafluorophenyl)borat (DAB) und Tris(pentafluorophenyl)boran (TPB) wurden als Handelsprodukte der Firma Albemarle Corp., USA verwendet. Als Träger wurden vorbehandeltes Silica (Sylopol 2104; Handelsprodukt von Grace, USA) und Methylaluminoxan-modifiziertes Silica (TA 02794/HL, Handelsprodukt von Witco, Deutschland) eingesetzt.

Die Polymerisationen wurden in einem 2,5 l Stahlreaktor ausgerüstet mit einem Wendelrüher, der für die Polymerisation im Festbett geeignet ist, durchgeführt. Über eine automatische Meßdatenerfassung konnte die Reaktion im Reaktor verfolgt werden. In den zuvor gründlich ausgeheizten und mit Stickstoff inertisierten Reaktor wurde über eine Schleuse im Stickstoffgegenstrom das inerte und wasserfreie Startbett (200 g PE-Pulver) eingefüllt. Bei einer Rührerdrehzahl von 200 Umdrehungen pro Minute wurde der Reaktor auf 50 °C aufgeheizt und anschließend die vorgesehene Katalysatormenge mit Stickstoff über die Schleuse in den Reaktor gedrückt und anschließend die Gasphasenzusammensetzung eingestellt:
Gasphaseneinstellung für Polyethylen (PE) - Polymerisation
Gesamtdruck: 6,0 bar; Partialdrücke: 0,8 bar Stickstoff; 5,2 bar Ethen.
Gasphaseneinstellung für EP(D)M - Fahrweise:
Gesamtdruck: 6,0 bar; Partialdrücke: 0,8 bar Stickstoff; 1,2 bar Propen; 4,0 bar Ethen.

Abhängig vom Gesamtreaktordruck wurde im Verlauf der Reaktion das verbrauchte Monomere automatisch nachdosiert. Die Reaktion wurde durch Entspannen des Reaktordruckes und Spülen mit Stickstoff beendet. Bei den Versuchen zur EPDM-Herstellung wurde das Termonomer Ethylidennorboren (ENB) (Inspec, Belgien) aus einer Bürette manuell in Abhängigkeit von der gebildeten Polymermenge während der Reaktion zudosiert.

Die Zusammensetzung der entstandenen EP(D)M-Polymere wurde per IR-Analyse nach der üblichen ASTM D3900 Norm bestimmt.

### Beispiel 1

### Vorbehandlung von Silica

200,0 g Silica (Sylopol 2104: Oberfläche von 311 m²/g; Porenvolumen 1,56 ml/g, Teilchengröße (D50) 51 µm) werden 32 Stunden im Drehrohrofen bei 450°C unter Schutzgas erhitzt und abgefüllt. Das so vorgetrocknete Silica wird in einem 4 l Dreihalskolben unter Stickstoffatmosphäre in 1200 ml n-Hexan suspendiert und tropfenweise innerhalb von 90 Minuten mit einer 20 w-%-Lösung von Triethylaluminium in Hexan versetzt. Die Temperatur soll dabei zwischen 15 und 20°C gehalten werden. Nach beendeter Zugabe wird noch 60 Minuten bei dieser Temperatur gerührt und die Suspension über eine Fritte P4 filtriert. Das Produkt wird fünfmal mit Portionen von 100 ml n-Hexan gewaschen und im Hochvakuum bei 20°C bis zur Gewichtskonstanz getrocknet. Der Aluminiumgehalt des auf diese Weise vorbehandelten Silicagels beträgt 3,1 w-%; es wurden 203,6 g Produkt (TEA-SiO₂) erhalten.

Methylaluminoxan-modifiziertes Silica (MAO-SiO₂) wurde ohne weitere Vorbehandlung eingesetzt und weist eine spezifische Oberfläche nach BET von 305 m²/g, ein Porenvolumen von 2,0 ml/g, eine mittlere Korngröße von 80 µm auf; der Aluminiumgehalt beträgt 24,5 w-%.

### Beispiel 2

### Herstellung von Katalysator 1 (EBTHIZrCl₂/MAO/Butylbenzol/MAO-SiO₂)

Zu 14,8 g MAO-SiO₂ wird unter Rühren langsam eine Lösung von 0,163 g EBTHIZrCl₂ und 66,4 ml 10 w-% MAO-Lösung in Toluol in 82,5 ml Toluol und 14,8 ml Butylbenzol getropft. Die entstandene Suspension wird 60 Minuten bei 20°C gerührt und das Toluol bei 20°C im Hochvakuum abdestilliert. Das erhaltene Destillat wies einen Gehalt an Butylbenzol von 4,0 v-% auf. Es wurde ein schwach gelbes, frei fließendes Pulver erhalten, das mit 11 µmol Zirconium-Komponente pro g Katalysatormaterial belegt war und ein Aluminium-Zirconium-Verhältnis von 640:1 aufwies.

### Beispiel 3

### Herstellung von Katalysator 2 (EBTHIZrCl₂/MAO/1,4-Diisopropylbenzol/MAO-SiO₂)

Zu 15,0 g MAO-SiO₂ wird unter Rühren langsam eine Lösung von 0,163 g EBTHIZrCl₂ und 67,5 ml 10 w-% MAO-Lösung in Toluol in 82,5 ml Toluol und 15,0 ml 1,4-Diisopropylbenzol getropft. Die entstandene Suspension wird 60 Minuten bei 20°C gerührt und das Toluol bei 20°C im Hochvakuum abdestilliert. Das erhaltene Destillat wies einen Gehalt an 1,4-Diisopropylbenzol von 0,6 v-% auf. Es wurde ein leicht gelbes, frei fließendes Pulver erhalten, das mit 11 µmol Zr-Komponente pro g Katalysatormaterial belegt war und ein Al-Zr-Verhältnis von 630:1 aufwies.

### Beispiel 4

### Herstellung von Katalysator 3 (EBTHIZrCl₂/MAO/Hexylbenzol/MAO-SiO₂)

Zu 14,7 g MAO-SiO₂ wird unter Rühren langsam eine Lösung von 0,163 g EBTHIZrCl₂ und 66,2 ml 10 w-% MAO-Lösung in Toluol in 80,9 ml Toluol und 14,7 ml Hexylbenzol getropft. Die entstandene Suspension wird 60 Minuten bei 20°C gerührt und das Toluol bei 20°C im Hochvakuum abdestilliert. Das erhaltene Destillat wies einen Gehalt an Hexylbenzol von 0,4 v-% auf. Es wurde ein gelbes, leicht agglomeriertes Pulver erhalten, das mit 11 µmol Zr-Komponente pro g Katalysatormaterial belegt war und ein Al-Zr-Verhältnis von 630:1 aufwies.

### Beispiel 5

### Herstellung von Katalysator 4 (EBTHIZrCl₂/MAO/Dodecylbenzol/MAO-SiO₂)

Zu 25,3 g MAO-SiO₂ wird unter Rühren langsam eine Lösung von 0,163 g EBTHIZrCl₂ und 113,9 ml 10 w-% MAO-Lösung in Toluol in 139,2 ml Toluol und 25,3 ml Dodecylbenzol getropft. Die entstandene Suspension wird 60 Minuten bei 20°C gerührt und das Toluol bei 20°C im Hochvakuum abdestilliert. Im erhaltenen Destillat konnte kein Dodecylbenzol nachgewiesen werden. Es wurde ein leicht grünliches, frei fließendes Pulver erhalten, das mit 11 µmol Zr-Komponente pro g Katalysatormaterial belegt war und ein Al-Zr-Verhältnis von 630:1 aufwies.

### Beispiel 6

### Herstellung von Katalysator 5 (EBTHIZrCl₂/MAO/Tetrahydronaphthalin/MAO-SiO₂)

Zu 19,2 g MAO-SiO₂ wird unter Rühren langsam eine Lösung von 0,207 g EBTHIZrCl₂ und 86,2 ml 10 w-% MAO-Lösung in Toluol in 105,3 ml Toluol und 19,2 ml 1,2,3,4-Tetrahydronaphthalin getropft. Die entstandene Suspension wird 60 Minuten bei 20°C gerührt und das Toluol bei 20°C im Hochvakuum abdestilliert. Das erhaltene Destillat wies einen Gehalt an Tetrahydronaphthalin von 1,8 v-% auf. Es wurde ein gelbliches, schwach agglomeriertes Pulver erhalten, das mit 10,5 µmol Zr-Komponente pro g Katalysatormaterial belegt war und ein Al-Zr-Verhältnis von 630:1 aufwies.

### Beispiel 7

### Herstellung von Katalysator 6 (EBTHIZrCl₂/MAO/Decahydronaphthalin/MAO-SiO₂)

Zu 19,4 g MAO-SiO₂ wird unter Rühren langsam eine Lösung von 0,215 g EBTHIZrCl₂ und 87,3 ml 10 w-% MAO-Lösung in Toluol in 106,7 ml Toluol und 19,4 ml Decahydronaphthalin getropft. Die entstandene Suspension wird 60 Minuten bei 20°C gerührt und das Toluol bei 20°C im Hochvakuum abdestilliert. Das erhaltene Destillat wies einen Gehalt an Decahydronaphthalin von 4,2 v-% auf. Es wurde ein schwach gelbes, leicht agglomeriertes Pulver erhalten, das mit 11,5 µmol Zr-Komponente pro g Katalysatormaterial belegt war und ein Al-Zr-Verhältnis von 615:1 aufwies.

### Beispiel 8

### Herstellung von Katalysator 7 (EBTHIZrCl₂/Butylbenzol/MAO-SiO₂)

Zu 20,0 g MAO-SiO₂ wird unter Rühren langsam eine Lösung von 0,214 g EBTHIZrCl₂ in 200,0 ml Toluol und 20,0 ml Butylbenzol getropft. Die entstandene Suspension wird 60 Minuten bei 20°C gerührt und das Toluol bei 20°C im Hochvakuum abdestilliert. Es wurde ein gelbliches, freifließendes Pulver erhalten, das mit 13,4 µmol Zr-Komponente pro g Katalysatormaterial belegt war und ein Al-Zr-Verhältnis von 360:1 aufwies.

### Beispiel 9

### Herstellung von Katalysator 8 (EBTHIZrCl₂/1,4-Diisopropylbenzol/MAO-SiO₂)

Zu 14,4 g MAO-SiO₂ wird unter Rühren langsam eine Lösung von 0,154 g EBTHIZrCl₂ in 144,0 ml Toluol und 14,4 ml 1,4-Diisopropylbenzol getropft. Die entstandene Suspension wird 60 Minuten bei 20°C gerührt und das Toluol bei 20°C im Hochvakuum abdestilliert. Es wurde ein hellgelbes, leicht agglomeriertes Pulver erhalten, das mit 13,5 µmol Zr-Komponente pro g Katalysatormaterial belegt war und ein Al-Zr-Verhältnis von 360:1 aufwies.

### Beispiel 10

### Herstellung von Katalysator 9 (EBTHIZrCl₂/Hexylbenzol/MAO-SiO₂)

Zu 14,3 g MAO-SiO₂ wird unter Rühren langsam eine Lösung von 0,152 g EBTHIZrCl₂ in 143,0 ml Toluol und 14,3 ml Hexylbenzol getropft. Die entstandene Suspension wird 60 Minuten bei 20°C gerührt und das Toluol bei 20°C im Hochvakuum abdestilliert. Es wurde ein gelbliches, frei fließendes Pulver erhalten, das mit 13,5 µmol Zr-Komponente pro g Katalysatormaterial belegt war und ein Al-Zr-Verhältnis von 360:1 aufwies.

### Beispiel 11

### Herstellung von Katalysator 10 (EBTHIZrCl₂/Tetrahydronaphthalin/MAO-SiO₂)

Zu 21,3 g MAO-SiO₂ wird unter Rühren langsam eine Lösung von 0,229 g EBTHIZrCl₂ in 213,0 ml Toluol und 21,3 ml 1,2,3,4-Tetrahydronaphthalin getropft. Die entstandene Suspension wird 60 Minuten bei 20°C gerührt und das Toluol bei 20°C im Hochvakuum abdestilliert. Es wurde ein schwach gelbes, frei fließendes Pulver erhalten, das mit 13,0 µmol Zr-Komponente pro g Katalysatormaterial belegt war und ein Al-Zr-Verhältnis von 360:1 aufwies.

### Beispiel 12

### Herstellung von Katalysator 11 (EBTHIZrCl₂/MAO/1,4-Diisopropylbenzol/TEA-SiO₂)

Zu 25,6 g TEA-SiO₂ wird unter Rühren langsam eine Lösung von 0,276 g EBTHIZrCl₂ und 115,0 ml 10 w-% MAO-Lösung in Toluol in 141,0 ml Toluol und 25,6 ml 1,4-Diisopropylbenzol getropft. Die entstandene Suspension wird 60 Minuten bei 20°C gerührt und das Toluol bei 20°C im Hochvakuum abdestilliert. Es wurde ein cremefarbenes, frei fließendes Pulver erhalten, das mit 11 µmol Zr-Komponente pro g Katalysatormaterial belegt war und ein Al-Zr-Verhältnis von 315:1 aufwies.

### Beispiel 13

### Herstellung von Katalysator 12 (EBTHIZrCl₂/1,4-Diisopropylbenzol/TEA-SiO₂)

Zu 14,0 g TEA-SiO₂ wird unter Rühren langsam eine Lösung von 0,151 g EBTHIZrCl₂ in 140,0 ml Toluol und 14,0 ml 1,4-Diisopropylbenzol getropft. Die entstandene Suspension wird 60 Minuten bei 20°C gerührt und das Toluol bei 20°C im Hochvakuum abdestilliert. Es wurde frei fließendes Pulver erhalten, das mit 13,5 µmol Zr-Komponente pro g Katalysatormaterial belegt war und ein Al-Zr-Verhältnis von 50:1 aufwies.

### Beispiel 14

### Herstellung von Katalysator 13 (EBTHIZrCl₂/DAB/Butylbenzol/MAO-SiO₂)

0,264 g EBTHIZrCl₂ werden in 122,0 ml Toluol und 24,4 ml Butylbenzol gelöst. Diese Lösung wird mit 8,1 ml 10 w-% TEA-Lösung in Toluol versetzt und 30 Minuten bei 20°C gerührt. Es werden 0,755 g DAB zugegeben und 15 Minuten bei 20°C gerührt. Diese Lösung wird unter Rühren langsam auf 24,4 g MAO-SiO₂ getropft, die entstandene Suspension wird 60 Minuten bei 20°C gerührt und das Toluol bei 20°C im Hochvakuum abdestilliert. Es wurde ein gelbes, frei fließendes Pulver erhalten, das mit 12,3 µmol Zr-Komponente pro g Katalysatormaterial belegt war, ein Al-Zr-Verhältnis von 365:1 und ein B-Zr-Verhältnis von 3:2 aufwies.

### Beispiel 15

### Herstellung von Katalysator 14 (EBTHIZrCl₂/DAB/Tetrahydronaphthalin/MAO-SiO₂)

0,221 g EBTHIZrCl₂ werden in 102,5 ml Toluol und 20,5 ml 1,2,3,4-Tetrahydronaphthalin gelöst. Diese Lösung wird mit 6,8 ml 10 w-% TEA-Lösung in Toluol versetzt und 30 Minuten bei 20°C gerührt. Es werden 0,621 g DAB zugegeben und 15 Minuten bei 20°C gerührt. Diese Lösung wird unter Rühren langsam auf 20,5 g MAO-SiO₂ getropft, die entstandene Suspension wird 60 Minuten bei 20°C gerührt und das Toluol bei 20°C im Hochvakuum abdestilliert. Es wurde ein frei fließendes Pulver erhalten, das mit 12,3 µmol Zr-Komponente pro g Katalysatormaterial belegt war, ein Al-Zr-Verhältnis von 370:1 und ein B-Zr-Verhältnis von 3:2 aufwies.

### Beispiel 16

### Herstellung von Katalysator 15 (EBTHIZrCl₂/TPB/Butylbenzol/MAO-SiO₂)

0,151 g EBTHIZrCl₂ werden in 70,5 ml Toluol und 14,1 ml Butylbenzol gelöst. Diese Lösung wird mit 4,7 ml 10 w-% TEA-Lösung in Toluol versetzt und 30 Minuten bei 20°C gerührt. Es werden 0,270 g TPB zugegeben und 15 Minuten bei 20°C gerührt. Diese Lösung wird unter Rühren langsam auf 14,1 g MAO-SiO₂ getropft, die entstandene Suspension wird 60 Minuten bei 20°C gerührt und das Toluol bei 20°C im Hochvakuum abdestilliert. Es wurde ein schwach gelbes, frei fließendes Pulver erhalten, das mit 13,1 µmol Zr-Komponente pro g Katalysatormaterial belegt war, ein Al-Zr-Verhältnis von 400:1 und ein B-Zr-Verhältnis von 3:2 aufwies.

### Beispiel 17

### Herstellung von Katalysator 16 (DADNiBr₂/MAO/Tetrahydronaphthalin/MAO-SiO₂)

Zu 16,6 g MAO-SiO₂ wird unter Rühren langsam eine Lösung von 0,262 g DADNiBr₂ und 74,7 ml 10 w-% MAO-Lösung in 91,3 ml Toluol und 16,6 ml 1,2,3,4-Tetrahydronaphthalin getropft. Die entstandene Suspension wird 60 Minuten bei 20°C gerührt und das Toluol bei 20°C im Hochvakuum abdestilliert. Es wurde ein graugrünes, frei fließendes Pulver erhalten, das mit 10,4 µmol Ni-Komponente pro g Katalysatormaterial belegt war und ein Al-Ni-Verhältnis von 630:1 aufwies.

### Beispiel 18

### Polymerisation von Ethen und anschließende Copolymerisation von Ethen/Propen im gerührten Festbettreaktor

Einsatz des Katalysators aus Beispiel 2 (EBTHIZrCl₂/MAO/Butylbenzol/ MAO-SiO₂); Katalysatoreinsatz: 0,010 mmol Zr; PE-Polymerisation nach 0,5 Std. beendet. Weitere Informationen und Ergebnisse siehe Tabelle I.

### Beispiel 19

### Polymerisation von Ethen und anschließende Copolymerisation von Ethen/Propen im gerührten Festbettreaktor

Einsatz des Katalysators aus Beispiel 3 (EBTHIZrCl₂/MAO/1,4-Diisopropylbenzol/MAO-SiO₂); Katalysatoreinsatz: 0,014 mmol Zr; PE-Polymerisation nach 0,5 Std. beendet.

Weitere Informationen und Ergebnisse siehe Tabelle I.

### Beispiel 20

### Polymerisation von Ethen und anschließende Terpolymerisation von Ethen/Propen/ENB im gerührten Festbettreaktor

Einsatz des Katalysators aus Beispiel 3 (EBTHIZrCl₂/MAO/1,4-Diisopropylbenzol/MAO-SiO₂); Katalysatoreinsatz: 0,024 mmol Zr; PE-Polymerisation nach 0,5 Std. beendet; 8,5 w-% ENB dosiert.

Weitere Informationen und Ergebnisse siehe Tabelle I.

### Beispiel 21

### Polymerisation von Ethen und anschließende Copolymerisation von Ethen/Propen im gerührten Festbettreaktor

Einsatz des Katalysators aus Beispiel 4 (EBTHIZrCl₂/MAO/Hexylbenzol/MAO-SiO₂); Katalysatoreinsatz: 0,031 mmol Zr; PE-Polymerisation nach 0,7 Std. beendet. Weitere Informationen und Ergebnisse siehe Tabelle I.

### Beispiel 22

### Polymerisation von Ethen und anschließende Terpolymerisation von Ethen/Propen/ENB im gerührten Festbettreaktor

Einsatz des Katalysators aus Beispiel 4 (EBTHIZrCl₂/MAO/Hexylbenzol/MAO-SiO₂); Katalysatoreinsatz: 0,010 mmol Zr; PE-Polymerisation nach 2,0 Std. beendet; 8,5 w-% ENB dosiert.

Weitere Informationen und Ergebnisse siehe Tabelle I.

### Beispiel 23

### Polymerisation von Ethen und anschließende Copolymerisation von Ethen/Propen im gerührten Festbettreaktor

Einsatz des Katalysators aus Beispiel 5 (EBTHIZrCl₂/MAO/Dodecylbenzol/MAO-SiO₂); Katalysatoreinsatz: 0,010 mmol Zr; PE-Polymerisation nach 0,5 Std. beendet. Weitere Informationen und Ergebnisse siehe Tabelle I.

### Beispiel 24

### Polymerisation von Ethen und Copolymerisation von Ethen/Propen im gerührten Festbettreaktor

Einsatz des Katalysators aus Beispiel 6 (EBTHIZrCl₂/MAO/Tetrahydronaphthalin/MAO-SiO₂); Katalysatoreinsatz: 0,019 mmol Zr; PE-Polymerisation nach 0,5 Std. beendet.

Weitere Informationen und Ergebnisse siehe Tabelle I.

### Beispiel 25

### Polymerisation von Ethen und anschließende Copolymerisation von Ethen/Propen im gerührten Festbettreaktor

Einsatz des Katalysators aus Beispiel 7 (EBTHIZrCl₂/MAO/Decahydronaphthalin/MAO-SiO₂); Katalysatoreinsatz: 0,009 mmol Zr; PE-Polymerisation nach 0,7 Std. beendet.

Weitere Informationen und Ergebnisse siehe Tabelle I.

### Beispiel 26

### Polymerisation von Ethen und anschließende Copolymerisation von Ethen/Propen im gerührten Festbettreaktor

Einsatz des Katalysators aus Beispiel 8 (EBTHIZrCl₂/Butylbenzol/MAO-SiO₂); Katalysatoreinsatz: 0,009 mmol Zr; PE-Polymerisation nach 0,5 Std. beendet.

Weitere Informationen und Ergebnisse siehe Tabelle I.

### Beispiel 27

### Polymerisation von Ethen und anschließende Copolymerisation von Ethen/Propen im gerührten Festbettreaktor

Einsatz des Katalysators aus Beispiel 9 (EBTHIZrCl₂/1,4-Diisopropylbenzol/MAO-SiO₂); Katalysatoreinsatz: 0,009 mmol Zr; PE-Polymerisation nach 0,5 Std. beendet.

Weitere Informationen und Ergebnisse siehe Tabelle I.

### Beispiel 28

### Polymerisation von Ethen und anschließende Copolymerisation von Ethen/Propen im gerührten Festbettreaktor

Einsatz des Katalysators aus Beispiel 10 (EBTHIZrCl₂/Hexylbenzol/MAO-SiO₂); Katalysatoreinsatz: 0,010 mmol Zr; PE-Polymerisation nach 0,5 Std. beendet.

Weitere Informationen und Ergebnisse siehe Tabelle I.

### Beispiel 29

### Polymerisation von Ethen und anschließende Copolymerisation von Ethen/Propen im gerührten Festbettreaktor

Einsatz des Katalysators aus Beispiel 11 (EBTHIZrCl₂/Tetrahydronaphthalin/MAO-SiO₂); Katalysatoreinsatz: 0,015 mMol Zr; PE-Polymerisation nach 0,8 Std. beendet.

Weitere Informationen und Ergebnisse siehe Tabelle I.

### Beispiel 30

### Polymerisation von Ethen und Copolymerisation von Ethen/Propen im gerührten Festbettreaktor

Einsatz des Katalysators aus Beispiel 12 (EBTHIZrCl₂/MAO/1,4-Diisopropylbenzol/TEA-SiO₂); Katalysatoreinsatz: 0,016 mmol Zr; PE-Polymerisation nach 0,5 Std. beendet.

Weitere Informationen und Ergebnisse siehe Tabelle I.

### Beispiel 31

### Polymerisation von Ethen und anschließende Terpolymerisation von Ethen/Propen/ENB im gerührten Festbettreaktor

Einsatz des Katalysators aus Beispiel 12 (EBTHI ZrCl₂/MAO/1,4-Diisopropylbenzol/TEA-SiO₂); Katalysatoreinsatz: 0,019 mmol Zr; PE-Polymerisation nach 0,5 Std. beendet; 7,0 w-% ENB dosiert.

Weitere Informationen und Ergebnisse siehe Tabelle I.

### Beispiel 32

### Polymerisation von Ethen und anschließende Copolymerisation von Ethen/Propen im gerührten Festbettreaktor

Einsatz des Katalysators aus Beispiel 13 (EBTHIZrCl₂/1,4-Diisopropylbenzol/TEA-SiO₂); Katalysatoreinsatz: 0,024 mmol Zr; PE-Polymerisation nach 0,5 Std. beendet.

Weitere Informationen und Ergebnisse siehe Tabelle I.

### Beispiel 33

### Polymerisation von Ethen und anschließende Copolymerisation von Ethen/Propen im gerührten Festbettreaktor

Einsatz des Katalysators aus Beispiel 14 (EBTHIZrCl₂/DAB/Butylbenzol/MAO-SiO₂); Katalysatoreinsatz: 0,011 mmol Zr; PE-Polymerisation nach 0,5 Std. beendet.

Weitere Informationen und Ergebnisse siehe Tabelle I.

### Beispiel 34

### Polymerisation von Ethen und anschließende Copolymerisation von Ethen/Propen im gerührten Festbettreaktor

Einsatz des Katalysators aus Beispiel 15 (EBTHIZrCl₂/DAB/Tetrahydronaphthalin/MAO-SiO₂); Katalysatoreinsatz: 0,015 mmol Zr; PE-Polymerisation nach 0,5 Std. beendet.

Weitere Informationen und Ergebnisse siehe Tabelle I.

### Beispiel 35

### Polymerisation von Ethen und anschließende Copolymerisation von Ethen/Propen im gerührten Festbettreaktor

Einsatz des Katalysators aus Beispiel 16 (EBTHIZrCl₂/TPB/Butylbenzol/MAO-SiO₂); Katalysatoreinsatz: 0,020 mmol Zr; PE-Polymerisation nach 0,5 Std. beendet.

Weitere Informationen und Ergebnisse siehe Tabelle I.

### Beispiel 36

### Polymerisation von Ethen und anschließende Copolymerisation von Ethen/Propen im gerührten Festbettreaktor

Einsatz des Katalysators aus Beispiel 17 (DADNiBr₂/MAO/Butylbenzol/MAO-SiO₂); Katalysatoreinsatz: 0,093 mmol Ni; PE-Polymerisation nach 0,5 Std. beendet.

Weitere Informationen und Ergebnisse siehe Tabelle 1.

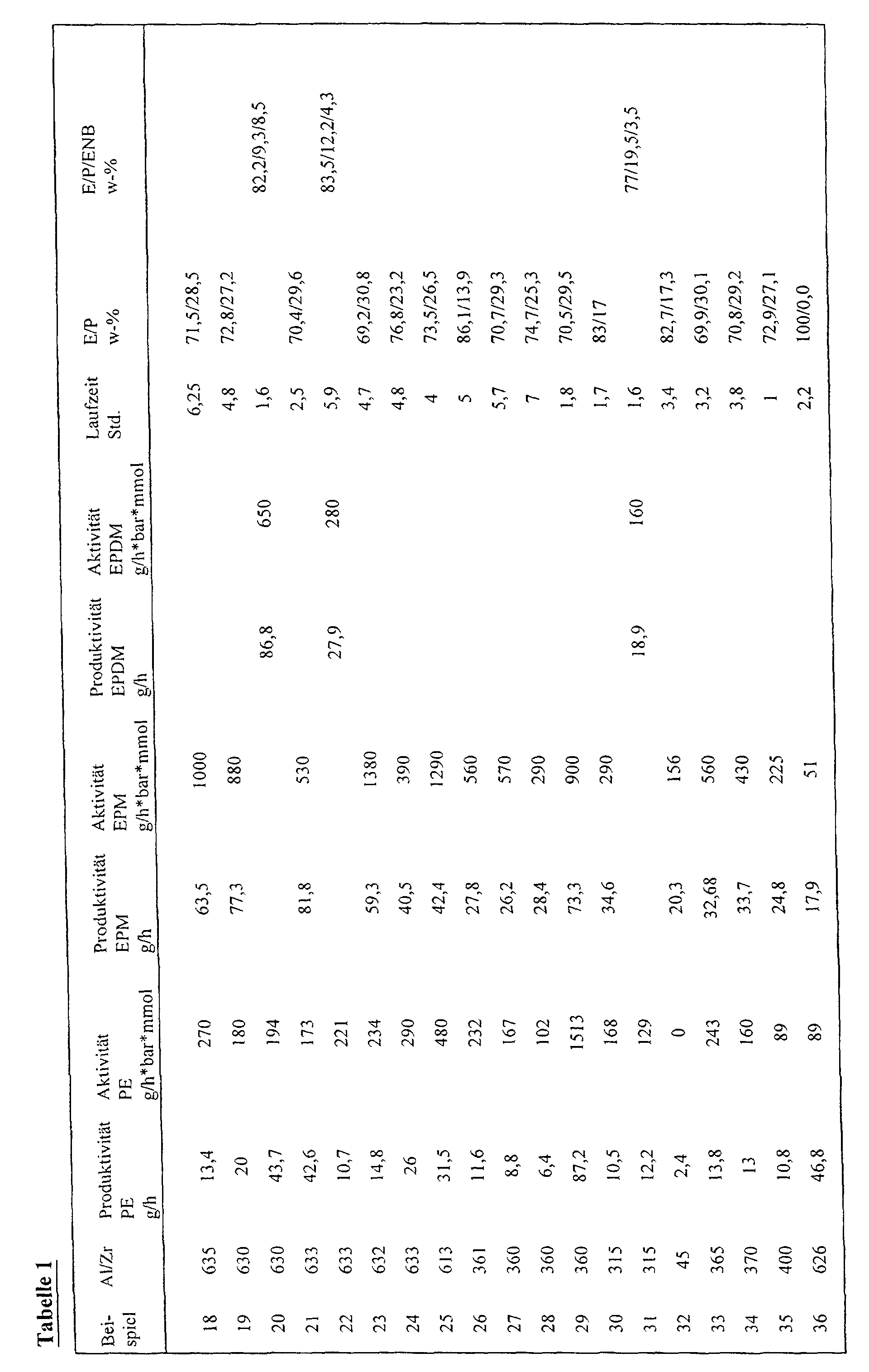

## Patentansprüche

1. Verfahren zur Herstellung geträgerter Polymerisationskatalysatorsysteme, **dadurch gekennzeichnet** (geändert), daß man
a) einen oder mehrere unterschiedliche Übergangsmetallkomplexe in einem Gemisch von mindestens zwei unterschiedlichen Lösungsmitteln, die sich in ihren Siedepunkten unterscheiden, löst, wobei das höher Siedende Lösungsmittel bei Normaldruck einen Siedepunkt von höher als 150 °C besitzt
b) die so erhaltene Lösung mit einem oder mehreren unterschiedlichen Trägermaterialien in Kontakt bringt, wobei das Volumen der Lösung ausreicht, um eine Aufschlämmung mit dem oder den Trägermaterialien zu bilden, wobei das Volumen des höher siedenden Lösungsmittels kleiner oder gleich dem Gesamtporenvolumens des Trägers ist, und
c) das bei niedrigerer Temperatur siedende Lösungsmittel zu mehr als 90 % entfernt, wobei der oder die Cokatalysatoren entweder zusammen mit dem oder den Übergangsmetallkomplexen in Schritt a) zugegeben werden oder bereits auf dem oder den in Schritt b) verwendeten Trägermaterialien aufgebracht worden sind oder teilweise zusammen mit dem Übergangsmetallkomplex in Schritt a) zugegeben werden und teilweise bereits auf dem oder den in Schritt b) verwendeten Trägermaterialien aufgebracht worden sind.

2. Verfahren nach Anspruch 1, **dadurch gekennzeichnet, daß** das Lösungsmittelgemisch die Katalysatorsystemkomponenten löst, inert gegenüber diesen ist und deren katalytischen Eigenschaften nicht nachteilig beeinflußt.

3. Verfahren nach Anspruch 1, **dadurch gekennzeichnet, daß** man als Lösungsmittel lineare oder verzweigte, aliphatische oder aromatische Kohlenwasserstoffe einsetzt.

4. Verfahren nach Anspruch 1, **dadurch gekennzeichnet, daß** man als niedriger siedendes Lösungsmittel Benzol, Toluol, Xylol, Cumol oder Propylbenzol einsetzt.

5. Verfahren nach Anspruch 1, **dadurch gekennzeichnet, daß** man als höher siedendes Lösungsmittel Butylbenzol, Hexylbenzol, Dodecylbenzol, 1,3-Diisopropylbenzol, 1,4-Diisopropylbenzol oder 1,2,3,4-Tetrahydronaphthalin einsetzt.

6. Verfahren nach Anspruch 1, **dadurch gekennzeichnet, daß** man als Trägermaterialien poröse, in den verwendeten Lösungsmittelgemischen formstabile, teilchenförmige, organische und/oder anorganischen Feststoffe mit einem Porenvolumen im Bereich von 0,1 bis 15 ml/g verwendet.

7. Verfahren nach Anspruch 1, **dadurch gekennzeichnet, daß** man als Trägermaterialien anorganische Feststoffe einsetzt, deren Porenvolumen zwischen 0,1 und 15 ml/g beträgt, deren spezifische Oberfläche zwischen 10 bis 1000 m²/g beträgt und deren Korngröße zwischen 10 und 2500 µm beträgt.

8. Verfahren nach Anspruch 1, **dadurch gekennzeichnet, daß** man als Träger Silicagele, Fällungskieselsäuren, Tone, Alumosilikate, Talkum, Zeolithe, Ruß, Siliciumdioxid, Aluminiumoxid, Magnesiumoxid, Titandioxid, Magnesiumchlorid, Natriumchlorid, Lithiumchlorid, Calciumchlorid, Zinkchlorid, oder Calciumcarbonat einsetzt.

## Claims

1. Process for the preparation of supported polymerisation catalyst systems, **characterised in that**
a) one or more different transition metal complexes are dissolved in a mixture of at least two different solvents having different boiling points, the higher-boiling solvent having a boiling point greater than 150°C at normal pressure,
b) the solution so obtained is brought into contact with one or more different support materials, the volume of the solution being sufficient to form a slurry with the support material(s), the volume of the higher-boiling solvent being less than or equal to the total pore volume of the support, and
c) more than 90 % of the solvent boiling at the lower temperature is removed, wherein the cocatalyst(s) either is/are added together with the transition metal complex(es) in step a) or has/have already been applied to the support material(s) used in step b), or part is added together with the transition metal complex in step a) and part has already been applied to the support material(s) used in step b).

2. Process according to claim 1, **characterised in that** the solvent mixture dissolves the components of the catalyst system, is inert towards them and does not adversely affect their catalytic properties.

3. Process according to claim 1, **characterised in that** linear or branched, aliphatic or aromatic hydrocarbons are used as the solvents.

4. Process according to claim 1, **characterised in that** benzene, toluene, xylene, cumene or propylbenzene is used as the lower-boiling solvent.

5. Process according to claim 1, **characterised in that** butylbenzene, hexylbenzene, dodecylbenzene, 1,3-diisopropylbenzene, 1,4-diisopropylbenzene or 1,2,3,4-tetrahydronaphthalene is used as the higher-boiling solvent.

6. Process according to claim 1, **characterised in that** there are used as support materials porous, particulate, organic and/or inorganic solids which are dimensionally stable in the solvent mixtures used and have a pore volume in the range of from 0.1 to 15 ml/g.

7. Process according to claim 1, **characterised in that** there are used as support materials inorganic solids whose pore volume is from 0.1 to 15 ml/g, whose specific surface area is from 10 to 1000 m²/g and whose particle size is from 10 to 2500 µm.

8. Process according to claim 1, **characterised in that** there are used as the support silica gels, precipitated silicas, clays, alumosilicates, talcum, zeolites, carbon black, silicon dioxide, aluminium oxide, magnesium oxide, titanium dioxide, magnesium chloride, sodium chloride, lithium chloride, calcium chloride, zinc chloride or calcium carbonate.

## Revendications

1. Procédé de préparation de systèmes catalytiques de polymérisation supportés, **caractérisé en ce qu'**on effectue les étapes consistant à :
a) dissoudre un ou plusieurs complexes de métal de transition différents dans un mélange d'au moins deux solvants différents, qui se différencient par leur points d'ébullition, le solvant ayant le point d'ébullition le plus élevé ayant un point d'ébullition à pression normale supérieur à 150°C,
b) amener en contact la solution ainsi obtenue avec un ou plusieurs matériaux de support différents, le volume de la solution étant suffisant pour former une suspension avec le ou les matériaux supports, le volume du solvant ayant le point d'ébullition le plus élevé étant inférieur ou égal au volume de pores total du support, et
c) éliminer plus de 90% du solvant ayant le point d'ébullition le plus bas, le ou les co-catalyseurs étant ajoutés avec le ou les complexes de métal de transition dans l'étape a) ou étant appliqués en partie déjà sur le ou les matériaux supports utilisés dans l'étape b) ou en partie étant amenés avec le complexe de métal de transition dans l'étape a) et en partie appliqués déjà sur le ou les matériaux supports utilisés dans l'étape b).

2. Procédé selon la revendication 1, **caractérisé en ce que** le mélange de solvants dissout les composants du système catalytique, est inerte vis-à-vis de ceux-ci et n'affecte pas négativement leurs propriétés catalytiques.

3. Procédé selon la revendication 1, **caractérisé en ce qu'**on ajoute comme solvants des hydrocarbures aromatiques ou aliphatiques linéaires ou ramifiés.

4. Procédé selon la revendication 1, **caractérisé en ce qu'**on ajoute comme solvant à bas point d'ébullition, le benzène, le toluène, le xylène, le cumène ou le propylbenzène.

5. Procédé selon la revendication 1, **caractérisé en ce qu'**on ajoute comme solvant à point d'ébullition élevé le butylbenzène, l'hexylbenzène, le dodécylbenzène, le 1,3-diisopropylbenzène, le 1,4-diisopropylbenzène ou le 1,2,3,4-fétrahydronaphtalène.

6. Procédé selon la revendication 1, **caractérisé en ce qu'**on utilise comme matériaux supports des solides organiques et/ou minéraux, particulaires, de forme stable dans les mélanges de solvants utilisés, poreux, avec un volume de pores dans la plage de 0,1 à 15 ml/g.

7. Procédé selon la revendication 1, **caractérisé en ce qu'**on utilise comme matériaux supports des solides minéraux dont le volume de pores est entre 0,1 et 15 ml/g, dont la surface spécifique est entre 10 à 1000 m²/g et dont la grosseur de grains est entre 10 et 25000 µm.

8. Procédé selon la revendication 1, **caractérisé en ce qu'**on ajoute comme support des gels de silice, des silices précipitées, des argiles, des aluminosilicates, du talc, des zéolites, du noir de carbone, du dioxyde de silicium, de l'oxyde d'aluminium, de l'oxyde de magnésium, du dioxyde de titane, du chlorure de magnésium, du chlorure de sodium, du chlorure de lithium, du chlorure de calcium, du chlorure de zinc ou du carbonate de calcium.
